# EUROPEAN PATENT APPLICATION

(11) **EP 0 788 891 A1**
(43) Date of publication of application: **13.08.1997**
(21) Application number: 96200257.2
(22) Date of filing: 06.02.1996
(51) Int. Cl.: B41M 5/38, C09B 26/06, C09B 29/00, C09B 55/00

(54) **Dyes and dye-donor elements for thermal dye transfer recording**

(71) Applicant: AGFA-GEVAERT naamloze vennootschap, 2640 Mortsel (BE)
(72) Inventor: Vanmaele, Luc, 2640 Mortsel (BE)

(57) **Abstract**

The present invention provides a dye corresponding to the following general formula (I) and a dye-donor element for use according to thermal dye sublimation transfer. The dye-donor element comprises a support having thereon a dye layer comprising a polymeric binder and a dye corresponding to said general formula (I): 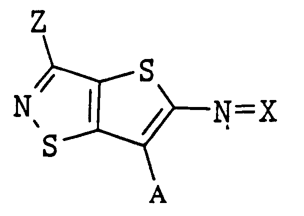 wherein:
- A: represents an electron withdrawing groups, e.g. CN, NO₂, alkanoyl, alkenoyl, alkynoyl, aroyl, alkylsulphonyl, alkenylsulphonyl, alkynylsulphonyl, arylsulphonyl, carboxylic ester, carboxyl amide;
- Z: represents hydrogen or a substituent, 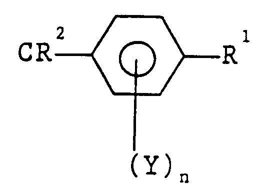
- X: represents N-R or
- R: represents NR³R⁴ or the residue of an aromatic coupling compound R-Q wherein Q is a group displaceable by a diazotised amine;
- R¹: represents NR³R⁴, OR¹² or SR¹²;
- R²: represents hydrogen, cyano, COR¹³, CO₂R¹³, CONR¹⁴R¹⁵, SO₂R¹⁶;
- R³ and R⁴: each independently represent hydrogen, an alkyl group, an alkenyl group, an alkynyl group, an aryl group, a heterocyclic group or R³ and R⁴ together with the nitrogen atom to which they are attached represent the atoms necessary to complete a ring or R³ and/or R⁴ and one of the Y-substituents together with the atoms to which they are attached represent the necessary atoms to form a 5- or 6- membered, fused-on heterocyclic ring;
- Y: represents a substituent, e.g. SH, OH, an amino group, a halogen, CN, NO₂, an alkyl group, an alkenyl group, an alkynyl group, an alkoxy group, a thioalkoxy group, a carbamoyl group, a sulfamoyl.

## Description

### 1. Field of the invention.

The present invention relates to dye-donor elements for use in thermal dye transfer methods in particular thermal dye sublimation transfer or thermal dye diffusion transfer and to novel dyes for use in said dye-donor elements.

### 2. Background of the invention.

Thermal dye sublimation transfer or thermal dye diffusion transfer is a recording method in which a dye-donor element provided with a dye layer containing sublimable dyes having heat transferability is brought into contact with a receiver sheet or receiver element and selectively, in accordance with a pattern information signal, is heated by means of a thermal printing head provided with a plurality of juxtaposed heat-generating resistors, whereby dye is transferred from the selectively heated regions of the dye-donor element to the receiver sheet and forms a pattern thereon, the shape and density of which are in accordance with the pattern and intensity of heat applied to the dye-donor element.

A dye-donor element for use according to thermal dye sublimation transfer usually comprises a very thin support e.g. a polyester support, one side of which is covered with a dye layer comprising the printing dyes. Usually, an adhesive or subbing layer is provided between the support and the dye layer. Normally, the opposite side is covered with a slipping layer that provides a lubricated surface against which the thermal printing head can pass without suffering abrasion. An adhesive layer may be provided between the support and the slipping layer.

The dye layer can be a monochromic dye layer or it may comprise sequential repeating areas of differently coloured dyes e.g. dyes having a cyan, magenta, yellow, and optionally black hue. When a dye-donor element containing three or more primary colour dyes is used, a multicolour image can be obtained by sequentially performing the dye transfer process steps for each colour.

A primary coloured dye layer e.g. a magenta or cyan or yellow dye layer may comprise only one primary coloured dye (a magenta, cyan or yellow dye respectively) or may comprise a mixture of two or more primary colour dyes of the same hue (two magenta, two cyan or two yellow dyes respectively).

Any dye can be used in such a dye layer provided it is easily transferable to the dye-image-receiving layer of the receiver sheet or element by the action of heat.

Typical and specific examples of dyes for use in thermal dye sublimation transfer have been described in e.g. EP 209,990, EP 209,991, EP 216,483, EP 218,397, EP 227,095, EP 227,096, EP 229,374, EP 235,939, EP 247,737, EP 257,577, EP 257,580, EP 258,856, EP 400,706,EP 279,330, EP 279,467, EP 285,665, US 4,743,582, US 4,753,922, US 4,753,923, US 4,757,046, US 4,769,360, US 4,771,035, US 5,026,677, JP 84/78,894, JP 84/78,895, JP 84/78,896, JP 84/227,490, JP 84/227,948, JP 85/27,594, JP 85/30,391, JP 85/229,787, JP 85/229,789, JP 85/229,790, JP 85/229,791, JP 85/229,792, JP 85/229,793, JP 85/229,795, JP 86/41,596, JP 86/268,493, JP 86/268,494, JP 86/268,495, and JP 86/284,489.

In spite of the many dyes that already exist, there is still a continuous search for novel dyes and especially for dyes that are suited for use in dye-donor elements for thermal dye sublimation transfer printing, preferably dyes with low melting points and a good solubility in ecologically acceptable solvents.

### 3. Summary of the invention.

It is therefore an object of the present invention to provide novel dye-donor elements for use according to thermal dye sublimation transfer printing.

It is another object of the present invention to provide novel dyes that can be used in said dye-donor elements.

Other objects will become apparent from the description hereinafter.

In accordance with the present invention a dye-donor element for use according to thermal dye sublimation transfer is provided, said dye-donor element comprising a support having thereon a dye layer comprising a polymeric binder and at least one dye, wherein said at least one dye corresponds to the following general formula (I) : 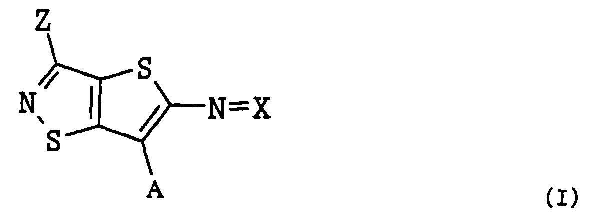 wherein :
A represents an electron withdrawing group, e.g. CN, NO₂, alkanoyl, alkenoyl, alkynoyl, aroyl, alkylsulphonyl, alkenylsulphonyl, alkynylsulphonyl, arylsulphonyl, carboxylic ester, carboxyl amide;
Z represents hydrogen or a substituent, 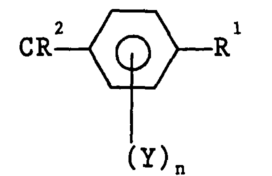
X represents N-R or
R represents NR³R⁴ or the residue of an aromatic coupling compound R-Q wherein Q is a group displaceable by a diazotised amine;
R¹ represents NR³R⁴, OR¹² or SR¹²;
R² represents hydrogen, cyano, COR¹³, CO₂R¹³, CONR¹⁴R¹⁵, SO₂R¹⁶;
R³ and R⁴ each independently represent hydrogen, an alkyl group, an alkenyl group, an alkynyl group, an aryl group, a heterocyclic group or R³ and R⁴ together with the nitrogen atom to which they are attached represent the atoms necessary to complete a ring or R³ and/or R⁴ and one of the Y-substituents together with the atoms to which they are attached represent the necessary atoms to form a 5- or 6- membered, fused-on heterocyclic ring ;
Y represents a substituent, e.g. SH, OH, an amino group, a halogen, CN, NO₂, an alkyl group, an alkenyl group, an alkynyl group, an alkoxy group, a thioalkoxy group, a carbamoyl group, a sulfamoyl group, an acylamino group, a sulfonylamino group or a carboxylic ester;
n represents 0, 1, 2, 3 or 4, the substituents being the same or different when n is greater than 1 or two or more Y substituents can form an annelated ring system;
R¹², R¹³, R¹⁴ and R¹⁵ each independently represent hydrogen, an alkyl group, an alkenyl group, an alkynyl group, an aryl group, a heterocyclic ring or R¹⁴ and R¹⁵ together with the atoms to which they are attached represent the necessary atoms to form a 5- or 6-membered ring or R¹³ or R¹⁴ or R¹⁵ or R¹⁴ and R¹⁵ together with one of the Y-substituents and the atoms to which they are attached represent the necessary atoms to form a 5- or 6-membered fused-on heterocyclic ring;
R¹⁶ represents hydroxy, an alkoxy group, an aryloxy group, NR¹⁷R¹⁸, an aryl group or an alkyl group, an alkenyl group, an alkynyl group, or R¹⁶ together with one of the Y-substituents and the atoms to which they are attached represent the necessary atoms to form a 5- or 6-membered fused-on heterocyclic ring;
R¹⁷ and R¹⁸ each independently represent hydrogen, an alkyl group, an alkenyl group, an alkynyl group, an aryl group, a heterocyclic ring or R¹⁷ and R¹⁸ together with the atoms to which they are attached represent the necessary atoms to form a 5- or 6-membered ring.

The present invention also provides novel yellow and magenta dyes corresponding to the above general formula I.

According to the present invention there is further provided a method for making an image according to the thermal dye transfer process comprising the steps of :
- placing the dye layer of a dye donor element as defined above in face-to-face relationship with a dye-image receiving layer of a receiver sheet;
- image-wise heating a thus obtained assemblage and
- separating said receiver sheet from said dye donor element.

### 4. Detailed description of the invention.

In the above formula (I), when X represents N-R wherein R represents the residue of an aromatic coupling compound, the coupler R-Q is preferably of the formula R-H, in which the displaceable group Q, is hydrogen. Preferably R is represented by general formula (II), in which 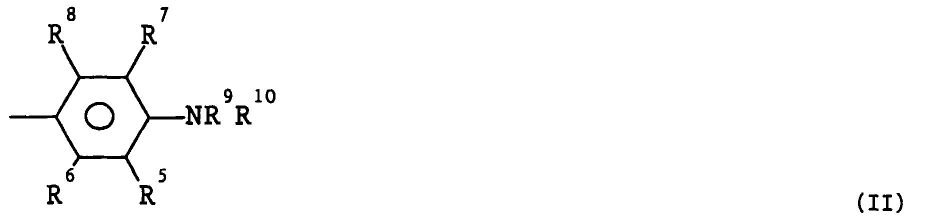
R⁵, R⁶, R⁷, and R⁸ each independently represent hydrogen, an alkyl group, an alkenyl group, an alkynyl group, an aryl group, an alkoxy group, an alkylthio group, an arylthio group, an aryloxy group, a carbamoyl group, a sulfamoyl group, hydroxy, SH, an amino group, a sulfonate, a halogen, NO₂, CN, NHSO₂R¹¹, NHCOR¹¹, OSO₂R¹¹, OCOR¹¹, COR¹¹ or R⁷ and R⁸ together and/or R⁵ and R⁶ together with the atoms to which they are attached represent the necessary atoms to complete a ring or R⁷ and R⁹ together with the atoms to which they are attached and/or R⁵ and R¹⁰ together with the atoms to which they are attached represent the necessary atoms to form a heterocyclic ring;
R¹¹ represents an alkyl group, an alkenyl group, an alkynyl group, an aryl group, an alkyloxy group, an aryloxy group, an alkylthio group, an arylthio group, an amino group or a heterocyclic group;
R⁹ and R¹⁰ each independently represent hydrogen, an alkyl group, an alkenyl group, an alkynyl group, an aryl group, a heterocyclic group or R⁹ and R¹⁰ together with the atoms to which they are attached represent the necessary atoms to form a heterocyclic ring.

The variables R³ and R⁴ in the above formula preferably represent methyl, ethyl, propyl, isopropyl, butyl, sec.butyl, tert.butyl, isobutyl, cyclohexyl, benzyl, cyclopentyl, a phenyl group substituted preferentially in ortho and/or para with methyl, ethyl, halogen, NO₂, CN, SO₂CH₃, alkoxy such as methoxy, dialkylamino such as dimethylamino, diethylamino and dibutylamino, alkylthio, carboalkoxy such as carbomethoxy and carboethoxy or R³ and R⁴ together with the atoms to which they are attached form a heterocyclic ring, such as a tetrahydroquinoline ring, a tetrahydroisoquinoline ring, an imidazolyl ring, a pyrazolyl ring, a pyrazolidine ring, a pyrazoline ring, etc.;

A non-exhaustive list of dyes corresponding to the above general formula (I) is given in Table 1, 2 and 3 hereinafter.

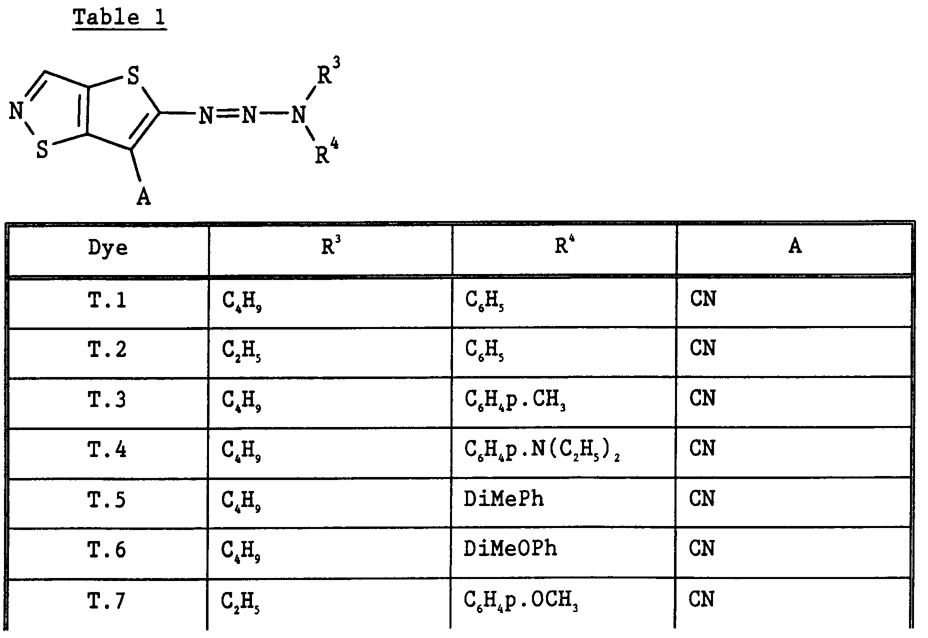

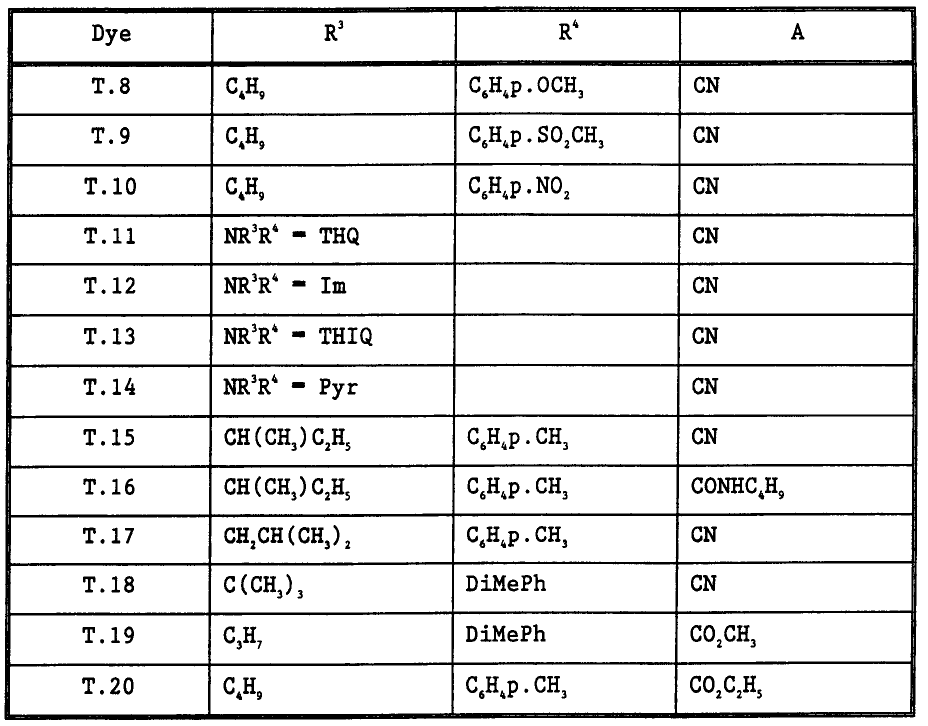

The meaning of the abreviations used in table 1 are explained hereinafter.

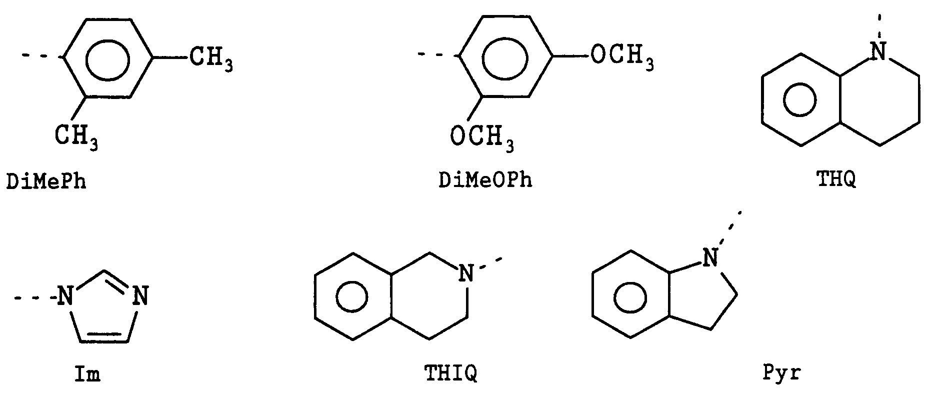

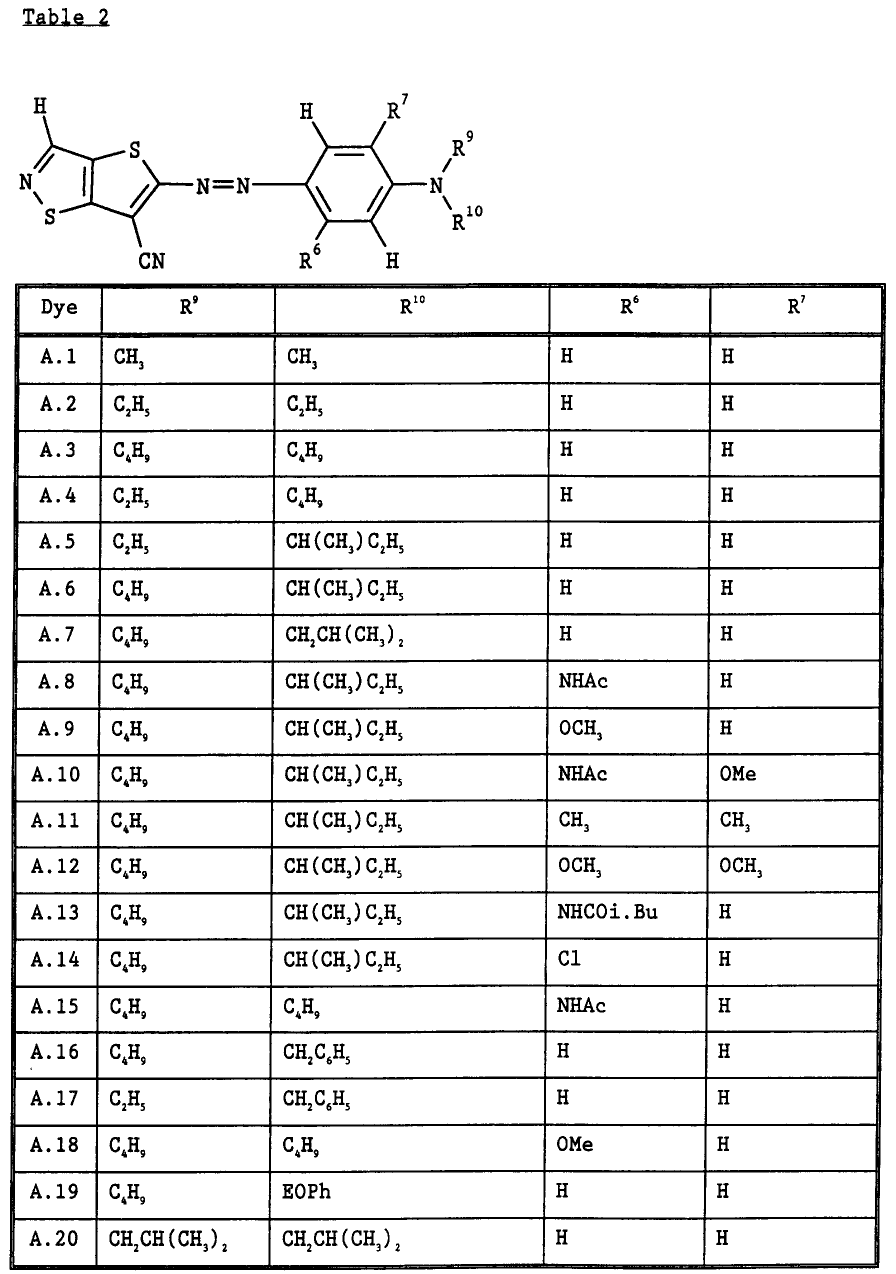

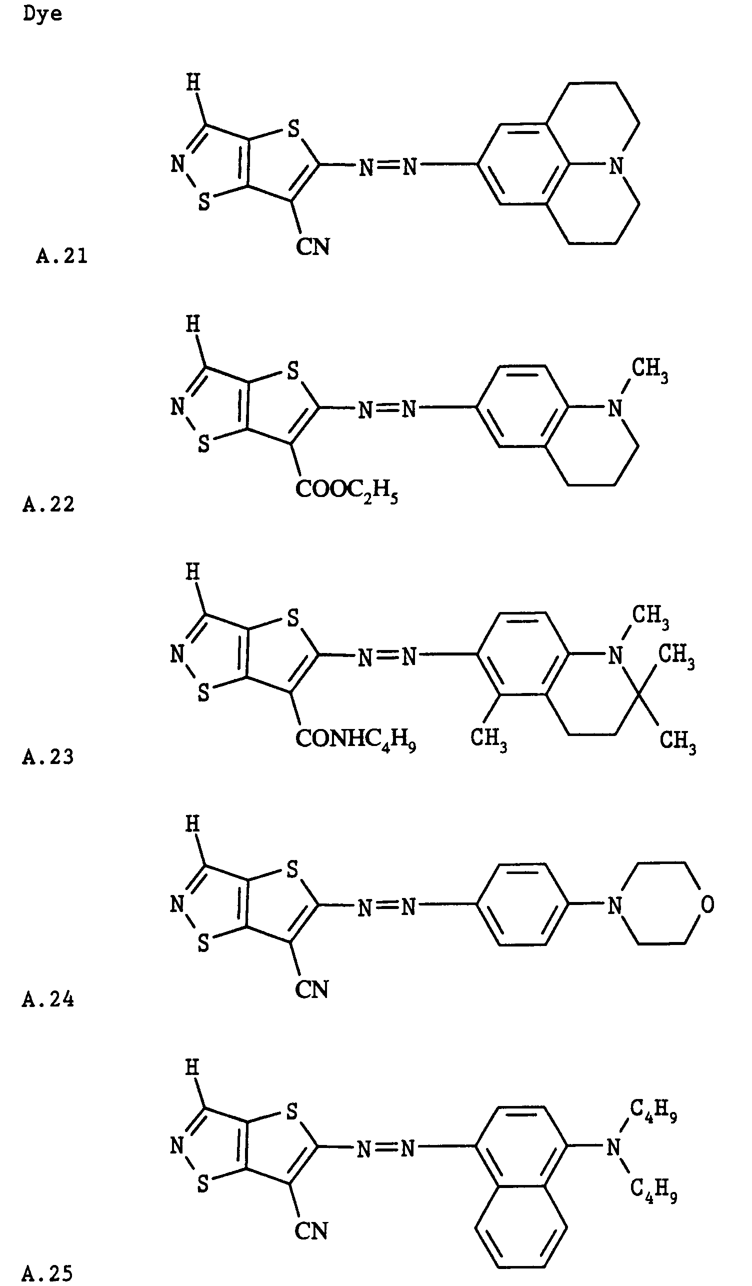

The meaning of the abbreviation used in table 2 is as follows:

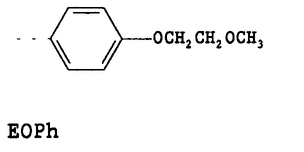

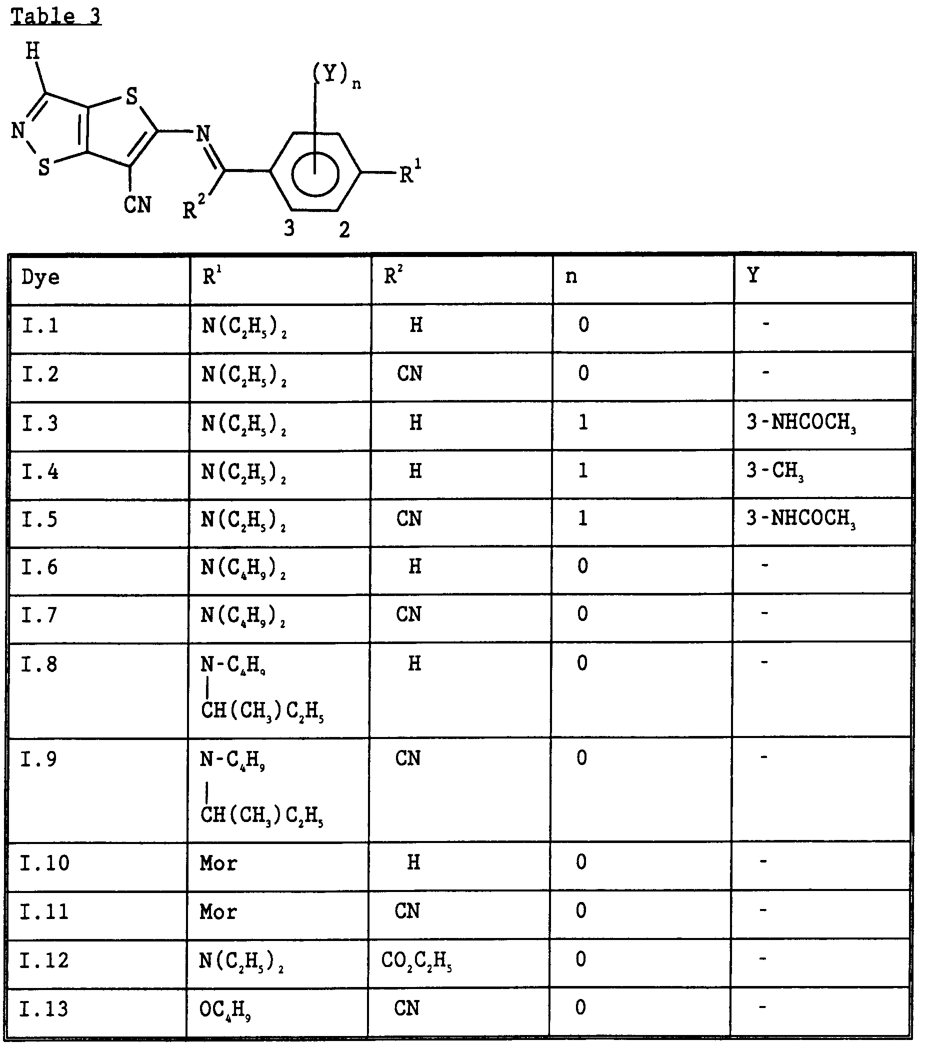

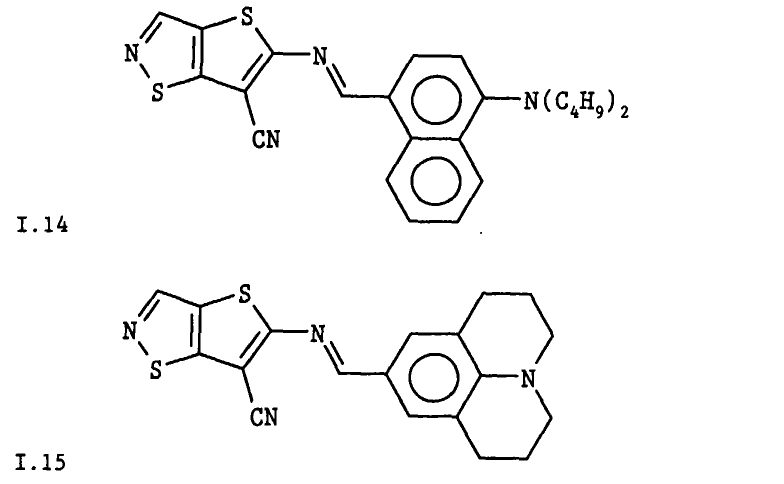

In table 3 the meaning of Mor is as follows: 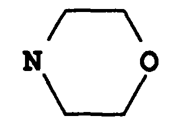 wherein the linking of the group is at the nitrogen.

The synthesis of the dyes according to formula I will become apparent from the examples given below.

### Example 1 : Synthesis of dye A.3

Dye A.3 is prepared according to scheme 1. Dye B is prepared according to known methods such as those described in EP 0 201 896.

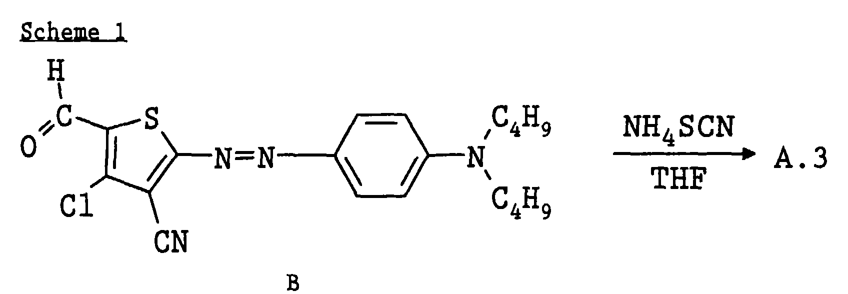

5.7 g (0.014 mole) of dye B and 2.3 g of NH₄SCN are stirred in 25 ml of DMA while being heated to 85° C. The mixture is stirred for 5 hours at 85° C. After cooling 250 ml of water is added and stirring is continued for 30 minutes. The precipitate is filtered, washed with water and dried. The product is purified by column chromatography. 2.5 g of pure dye A.3 is obtained (mp 161° C). The structure of dye A.3 was confirmed by ¹H-NMR analysis (20° C, 300 MHz, CDCl₃) : 0.99 ppm (CH₃); 1.42 ppm (CH₂), 1.65 ppm (CH₂), 3.42 ppm (N-CH₂), 6.68 ppm and 7.88 ppm (phenyl), 8.58 ppm (N=CH). And by ¹³C-NMR analysis (CDCL₃, 20° C, 75 MHz) :

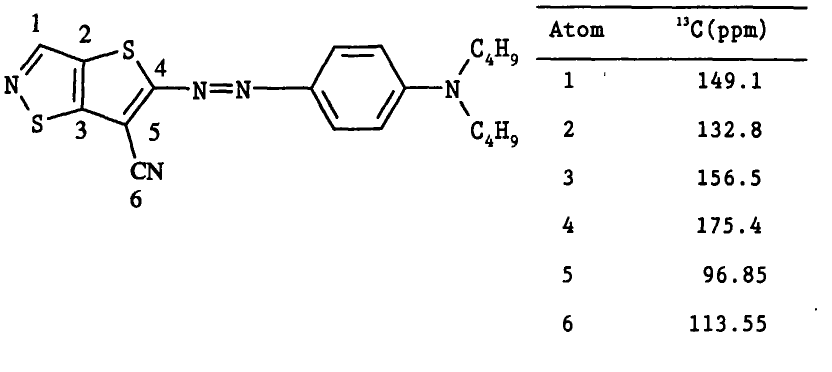

λₘₐₓ (CH₃OH)=560nm (εₘₐₓ=62372 l mol⁻¹ cm⁻¹). Dye A.6 is prepared analogously; mp = 85° C; λₘₐₓ (CH₃OH) = 566 nm (εₘₐₓ = 61853 l mol⁻¹cm⁻¹).

### Example 2 : Synthesis of dye T.3

Dye T.3 is prepared according to scheme 2. The starting materials C and D can be prepared according to literature procedures known to those who are skilled in the art of organic synthesis. e.g. OS 3738910 for the preparation of C.

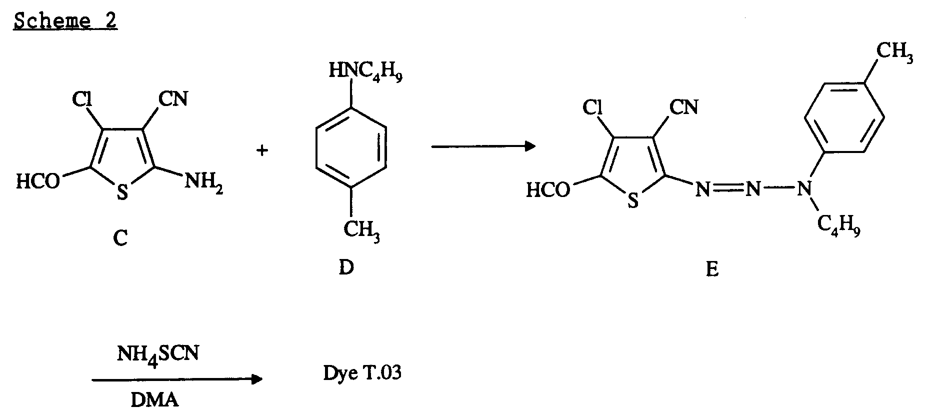

### Preparation of dye E

60 ml of nitrosylsulphuric acid is added at 0° C to a suspension of 47 g of product C in 320 g of phosphoric acid. The reaction mixture is stirred for one hour at 0° C. This solution of the diazonium salt is added at 0° C to a mixture of 41 g of product D in 400 ml of acetic acid. 400 ml of tetrahydrofuran (THF) and 500 g of ice. The mixture is stirred for 30 minutes at 0° C. A solution of 700 g of sodium acetate trihydrate in 1 l of water is added at 0° C and stirring is continued for one hour. The precipitate is filtered, washed with water and dried to obtain 80 g of dye E.

### Prepartion of dye T.3

A suspension of 8 g (0.022 mole) of dye E and 4.9 g (0.064 mole) of NH₄SCN in 33 ml N,N-dimethylacetamide (DMA) are stirred at 85° C for 4 hours. After cooling 200 ml of water are added and stirring is continued for one hour. The precipitate is filtered, washed with water and dried. The product is purified by column chromatography to obtain 2.4 g of pure dye T.3 (mp 143° C). λₘₐₓ (CH₃OH) = 412 nm (εₘₐₓ = 29226 l mol⁻¹cm⁻¹).
The dyes mentioned in table 3 are prepared from the corresponding imine dyes through cyclization with NH₄SCN in DMA, analogously to the preparation of the dyes from table 1 and 2. The synthesis of the imine dyes is described in EP 691213.

The dyes can be used as filter dyes e.g. for silver halide colour photographic materials and also as antihalation dyes.

The dyes corresponding to the general formula (I) defined above can be used in inkjet printing, resistive ribbon printing, in inks e.g. for laser applications, in textile, in lacquers, and in paints. They can also be used for transfer printing on fabrics and for constructing filter array elements. According to a preferred embodiment of the present invention the dyes are used in the dye layer of a dye-donor element for thermal dye sublimation transfer.

To improve the stability of the dyes to light, the use of a metal complex of the dye e.g. a Ni or Co complex is also effective.

The dye layer is formed preferably by adding the dye, a polymeric binder medium, and other optional components to a suitable solvent or solvent mixture, dissolving or dispersing the ingredients to form a coating composition that is applied to a support, which may have been provided first with an adhesive or subbing layer, and dried.

The dye layer thus formed has a thickness of about 0.2 to 5.0 µm, preferably 0.4 to 2.0 µm, and the amount ratio of dye to binder ranges from 9:1 to 1:3 by weight, preferably from 2:1 to 1:2 by weight.

As polymeric binder the following can be used : cellulose derivatives, such as ethyl cellulose, hydroxyethyl cellulose, ethylhydroxy cellulose, ethylhydroxyethyl cellulose, hydroxypropyl cellulose, methyl cellulose, cellulose nitrate, cellulose acetate formate, cellulose acetate hydrogen phthalate, cellulose acetate, cellulose acetate propionate, cellulose acetate butyrate, cellulose acetate pentanoate, cellulose acetate benzoate, cellulose triacetate; vinyl-type resins and derivatives, such as polyvinyl alcohol, polyvinyl acetate, polyvinyl butyral, copolyvinyl butyral-vinyl acetal-vinyl alcohol, polyvinyl pyrrolidone, polyvinyl acetoacetal, polyacrylamide; polymers and copolymers derived from acrylates and acrylate derivatives, such as polyacrylic acid, polymethyl methacrylate and styrene-acrylate copolymers; polyester resins; polycarbonates; copolystyrene-acrylonitrile; polysulfones; polyphenylene oxide; organosilicones, such as polysiloxanes; epoxy resins and natural resins, such as gum arabic. Preferably, the binder for the dye layer of the present invention comprises cellulose acetate butyrate of copolystyrene-acrylonitrile.

The dyes in accordance with the present invention may be used in admixture with other known dyes for thermal sublimation printing. In particular they can be used in combination with tricyano- and dicyanovinyl dyes as disclosed in EP 671996, EP 594239 and with malononitrile dimer derived dyes as disclosed in EP-A-400706. The present dyes may also be used in admixture with azo dyes e.g. disperse azo dyes, anthraquinone dyes, indoaniline dyes, azomethine dyes. Examples of dyes that can be used in combination with the dyes of the present invention are disclosed in e.g. EP 92203979, EP 209,990, EP 209,991, EP 216,483, EP 218,397, EP 227,095, EP 227,096, EP 229,374, EP 235,939, EP 247,737, EP 257,577, EP 257,580, EP 258,856, EP 279,330, EP 279,467, EP 285,665, EP 400,706, US 4,743,582, US 4,753,922, US 4,753,923, US 4,757,046, US 4,769,360, US 4,771,035, US 5,026,677, JP 84/78,894, JP 84/78,895, JP 84/78,896, JP 84/227,490, JP 84/227,948, JP 85/27,594, JP 85/30,391, JP 85/229,787, JP 85/229,789, JP 85/229,790, JP 85/229,791, JP 85/229,792, JP 85/229,793, JP 85/229,795, JP 86/41,596, JP 86/268,493, JP 86/268,494, JP 86/268,495, and JP 86/284,489, US 4,839,336, US 5,168,094, US 5,147,844, US 5,177,052, US 5,175,069, US 5,155,088, US 5,166,124, US 5,166,129, US 5,166,128, US 5,134,115, US 5,132,276, US 5,132,275, US 5, 132,274, US 5,132,273, US 5,132,268, US 5,132,267, US 5,126,314, US 5,126,313, US 5,126,312, US 5,126,311, US 5,134,116. US 4,975,410, US 4,885,272, US 4,886,029, etc..

The coating layer may also contain other additives, such as curing agents, preservatives, organic or inorganic fine particles, dispersing agents, antistatic agents, defoaming agents, viscosity-controlling agents, these and other ingredients have been described more fully in EP 133,011, EP 133,012, EP 111,004, and EP 279,467.

Any material can be used as the support for the dye-donor element provided it is dimensionally stable and capable of withstanding the temperatures involved, up to 400°C over a period of up to 20 msec, and is yet thin enough to transmit heat applied on one side through to the dye on the other side to effect transfer to the receiver sheet within such short periods, typically from 1 to 10 msec. Such materials include polyesters such as polyethylene terephthalate, polyamides, polyacrylates, polycarbonates, cellulose esters, fluorinated polymers, polyethers, polyacetals, polyolefins, polyimides, glassine paper and condenser paper. Preference is given to a support comprising polyethylene terephthalate. In general, the support has a thickness of 2 to 30 µm. The support may also be coated with an adhesive or subbing layer, if desired.

The dye layer of the dye-donor element may be coated on the support or printed thereon by a printing technique such as a gravure process.

A dye barrier layer comprising a hydrophilic polymer may also be employed between the support and the dye layer of the dye-donor element to enhance the dye transfer densities by preventing wrong-way transfer of dye backwards to the support. The dye barrier layer may contain any hydrophilic material that is useful for the intended purpose. In general, good results have been obtained with gelatin, polyacrylamide, polyisopropyl acrylamide, butyl methacrylate-grafted gelatin, ethyl methacrylate-grafted gelatin, ethyl acrlate-grafted gelatin, cellulose monoacetate, methylcellulose, polyvinyl alcohol, polyethyleneimine, polyacrylic acid, a mixture of polyvinyl alcohol and polyvinyl acetate, a mixture of polyvinyl alcohol and polyacrylic acid, or a mixture of cellulose monoacetate and polyacrylic acid. Suitable dye barrier layers have been described in e.g. EP 227091 and EP 228065. Certain hydrophilic polymers, e.g. those described in EP 227091, also have an adequate adhesion to the support and the dye layer, so that the need for a separate adhesive or subbing layer is avoided. These particular hydrophilic polymers used in a single layer in the dye-donor element thus perform a dual function, hence are referred to as dye-barrier/subbing layers.

Preferably the reverse side of the dye-donor element has been coated with a slipping layer to prevent the printing head from sticking to the dye-donor element. Such a slipping layer would comprise a lubricating material such as a surface active agent, a liquid lubricant, a solid lubricant or mixtures thereof, with or without a polymeric binder. The surface-active agents may be any agents known in the art such as carboxylates, sulfonates, phosphates, aliphatic amine salts, aliphatic quaternary ammonium salts, polyoxyethylene alkyl ethers, polyethylene glycol fatty acid esters, fluoroalkyl C2-C20 aliphatic acids. Examples of liquid lubricants include silicone oils, synthetic oils, saturated hydrocarbons and glycols. Examples of solid lubricants include various higher alcohols such as stearyl alcohol, fatty acids and fatty acid esters. Suitable slipping layers have been described in e.g. EP 138483, EP 227090, US 4567113, US 4572860, US 4717711. Preferably the slipping layer comprises a styrene-acrylonitrile copolymer or a styrene-acrylonitrile-butadiene copolymer or a mixture thereof or a polycarbonate as described in EP-A-527520 as binder and a polysiloxane-polyether copolymer or polytetrafluoroethylene or a mixture thereof as lubicrant in an amount of 0.1 to 10% by weight of the binder or binder mixture.

The support for the receiver sheet that is used with the dye-donor element may be a transparant film of e.g. polyethylene terephthalate, a polyether sulfone, a polyimide, a cellulose ester or a polyvinyl alcohol-co-acetal. The support may also be a reflective one such as baryta-coated paper, polyethylene-coated paper or white polyester i.e. white-pigmented polyester. Blue-coloured polyethylene terephthalate film can also be used as support.

To avoid poor adsorption of the transferred dye to the support of the receiver sheet or receiver element this support must be coated with a special surface, a dye-image-receiving layer, into which the dye can diffuse more readily. The dye-image-receiving layer may comprise, e.g. a polycarbonate, a polyurethane, a polyester, a polyamide, polyvinyl chloride, polystyrene-co-acrylonitrile, polycaprolactone or mixtures thereof. The dye-image receiving layer may also comprise a heat-cured product of poly(vinylchloride/co-vinylacetate/co-vinylalcohol) and polyisocyanate. Suitable dye-receiving layers have been described in e.g. EP 133011, EP 133012, EP 144247, EP 227094, EP 228066.

In order to improve the light-fastness and other stabilities of recorded images, UV absorbers, singlet oxygen quenchers such as HALS-compounds (Hindered Amine Light Stabilizers) and/or antioxidants can be incorporated into the receiving layer.

The dye layer of the dye-donor element or the dye-image-receiving layer of the receiver sheet may also contain a releasing agent that aids in separating the dye-donor element from the receiving sheet after transfer. The releasing agents can also be incorporated in a separate layer on at least part of the dye layer and/or of the dye-image-receiving layer. Suitable releasing agents are solid waxes, fluorine- or phosphate-containing surface-active agents and silicone oils. Suitable releasing agents have been described in e.g. EP 133012, JP 85/19138 and EP 227092.

The dye-donor elements according to the invention are used to form a dye transfer image, which process comprises placing the dye layer of the dye-donor element in face-to-face relation with the dye-image-receiving layer of the receiver sheet or receiver element and image-wise heating preferably from the back of the dye-donor element. The transfer of the dye is accomplished by heating for about several milliseconds at a temperature of 400°C.

When the process is performed for but one single color, a monochrome dye transfer image is obtained. A multicolor image can be obtained by using a dye-donor element containing three or more primary colour dyes and sequentially performing the process steps described above for each colour. After the first dye has been transferred, the elements are peeled apart. The above sandwich of dye-donor element and receiver sheet is formed on three occasions during the time when heat is applied by the thermal printing head. After the first dye has been transferred, the elements are peeled apart. A second dye-donor element (or another area of the dye-donor element with a different dye area) is then brought in register with the dye-receiving element and the process is repeated. The third colour and optionally further colours are obtained in the same manner.

In addition to thermal heads, laser light, infrared flash or heated pens can be used as the heat source for supplying heat energy. Thermal printing heads that can be used to transfer dye from the dye-donor elements of the present invention to a receiver sheet are commercially available. In case laser light is used, the dye layer or another layer of the dye element has to contain a compound that absorbs the light emitted by the laser and converts it into heat e.g. carbon black.

Alternatively, the support of the dye-donor element may be an electrically resistive ribbon consisting of e.g. a multilayer structure of a carbon loaded polycarbonate coated with a thin aluminum film. Current is injected into the resistive ribbon by electrically adressing a printing head electrode resulting in highly localized heating of the ribbon beneath the relevant electrode. The fact that in this case the heat is generated directly in the resistive ribbon and that it is thus the ribbon that gets hot leads to an inherent advantage in printing speed using the resistive ribbon/electrode head technology compared to the thermal head technology, according to which the various elements of the thermal head get hot and must cool down before the head can move to the next printing position.

The following examples illustrate the invention in more detail without limiting, however, the scope thereof.

### Example 3

Receiver sheets were prepared by coating a subbed polyethylene terephthalate film having a thickness of 175 µm with a dye-image-receiving layer from a solution in ethyl methyl ketone of 3,6 g/m² of poly(vinyl chloride/co-vinyl acetate/co-vinyl alcohol) (Vinylite™ VAGD supplied by Union Carbide), 0,336 g/m² of diisocyanate (Desmodur™ VL supplied by Bayer AG), and 0,2 g/m² of hydroxy-modified polydimethylsiloxane (Tegomer™ H SI 2111 supplied by Goldschmidt).

Dye-donor elements for use according to thermal dye sublimation transfer were prepared as follows:

A solution comprising 0.5 % by weight of dye and 0.5 % by weight of copoly(styrene-acrylonitrile) (Luran™ 388S, supplied by BASF. Germany) as binder in ethyl methyl ketone was prepared.

From this solution a dye layer having a wet thickness of 100 µm was coated on a polyethylene terephthalate film support having a thickness of 6 µm and carrying a conventional subbing layer. The resulting dye layer was dried by evaporation of the solvent.

The opposite side of the film support was coated with a subbing layer of a copolyester comprising ethylene glycol, adipic acid, neopentyl glycol, terephthalic acid, isophthalic acid, and glycerol.

The resulting subbing layer was covered with a solution in methyl ethyl ketone of 0.5 g/m² of a homo-polycarbonate comprising recurring units of the following structural formula to form a heat-resistant layer :

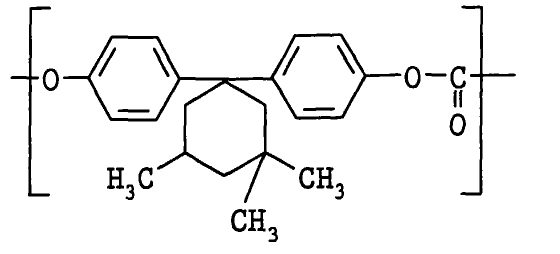

Finally, a top layer of polyether-modified polydimethylsiloxane (Tegoglide™ 410, Goldschmidt) was coated from a solution in isopropanol on the resulting heat-resistant polycarbonate layer.

The dye-donor element was printed in combination with a receiver sheet in a Mitsubishi colour video printer CP100E.

The receiver sheet was separated from the dye-donor element and the colour density value of the recorded image was measured in reflection by means of a Macbeth TR 924 densitometer in the red, green, and blue region in Status A mode.

The results are listed in Table 4.

**Table 4**

| Dye No. | Max.Dens. | Spectral absorption in Status A filter behind | | |
|---|---|---|---|---|
| | | Red | Green | Blue |
| T.3 | 260 | 10 | 14 | 150 |
| A.3 | 213 | 78 | 150 | 25 |
| A.6 | 361 | 85 | 150 | 28 |

### Example 4

Composition of high density black-coloured dye mixtures according to the present invention.

Receiver sheets were prepared as described in example 3.

Black dye-donor elements were prepared as follows :

The amounts of dyes as indicated in the following Table 5 were added each time to 10 ml of a solution of 0.5 % by weight of poly(styrene-co-acrylonitrile) (Luran™ 388S, supplied by BASF Germany) in ethyl methyl ketone. The resulting black-coloured dye mixtures were coated, printed, and evaluated as described in the above example 3, with the proviso that the densities are given in transmission.

The results of the tests are listed in the following Table 5.

The prior art dyes C-cyan and C-yellow having the following structural formulae were used in the tests.

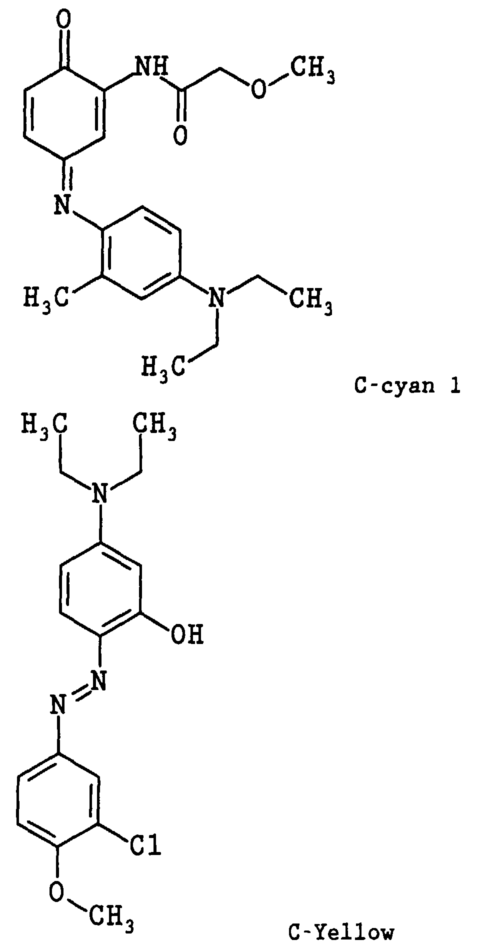

**Table 5**

| Test No. | Dye | Amount of dye in mg | Spectral absorption in Status A behind filter | | | |
|---|---|---|---|---|---|---|
| | | | Red | Green | Blue | Visual |
| 1 | C-cyan 1 | 30 | 175 | 205 | 144 | 206 |
| | A.3 | 50 | | | | |
| | C-yellow | 30 | | | | |

The results listed in Table 5 show that by means of dye-donor elements incorporating a dye mixture comprising a heterocyclic azo dye according to the present invention transferred dye images can be made, which have high black density values.

## Claims

1. Dye-donor element for use according to thermal dye sublimation transfer, said dye-donor element comprising a support having thereon a dye layer comprising a polymeric binder and a dye corresponding to the following general formula (I): 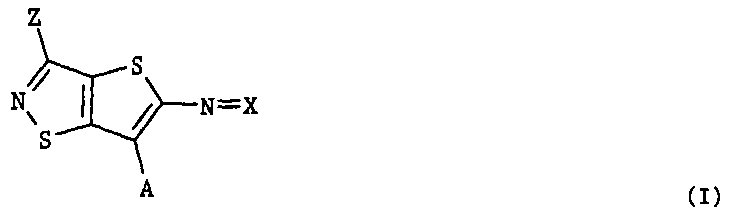 wherein :
A represents an electron withdrawing group;
Z represents hydrogen or a substituent, 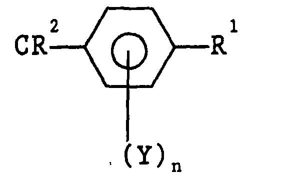
X represents N-R or
R represents NR³R⁴ or the residue of an aromatic coupling compound R-Q wherein Q is a group displaceable by a diazotised amine;
R¹ represents NR³R⁴, OR¹² or SR¹²;
R² represents hydrogen, cyano, COR¹³, CO₂R¹³, CONR¹⁴R¹⁵, SO₂R¹⁶;
R³ and R⁴ each independently represent hydrogen, an alkyl group, an alkynyl group, an aryl group, an alkenyl group, a heterocyclic group or R³ and R⁴ together with the atoms to which they are attached represent the atoms necessary to complete a ring or R³ and/or R⁴ and one of the Y-substituents together with the atoms to which they are attached represent the necessary atoms to form a 5- or 6- membered, fused-on heterocyclic ring;
Y represents a substituent;
n represents 0, 1, 2, 3 or 4, the substituents being the same or different when n is greater than 1 or two or more Y substituents can form an annelated ring system;
R¹², R¹³, R¹⁴ and R¹⁵ each independently represent hydrogen, an alkyl group, an alkenyl group, an alkynyl group, an aryl group, a heterocyclic ring or R¹⁴ and R¹⁵ together with the atoms to which they are attached represent the necessary atoms to form a 5- or 6-membered ring or R¹³ or R¹⁴ or R¹⁵ or R¹⁴ and R¹⁵ together with one of the Y-substituents and the atoms to which they are attached represent the necessary atoms to form a 5- or 6-membered fused-on heterocyclic ring;
R¹⁶ represents hydroxy, an alkoxy group, an aryloxy group, NR¹⁷R¹⁸, an aryl group or an alkyl group, an alkenyl group, an alkynyl group, or R¹⁶ together with one of the Y-substituents and the atoms to which they are attached represent the necessary atoms to form a 5- or 6-membered fused-on heterocyclic ring;
R¹⁷ and R¹⁸ each independently represent hydrogen, an alkyl group, an alkenyl group, an alkynyl group, an aryl group, a heterocyclic ring or R¹⁷ and R¹⁸ together with the atoms to which they are attached represent the necessary atoms to form a 5- or 6-membered ring.

2. A dye-donor element according to claim 1, wherein R corresponds to the following formula: 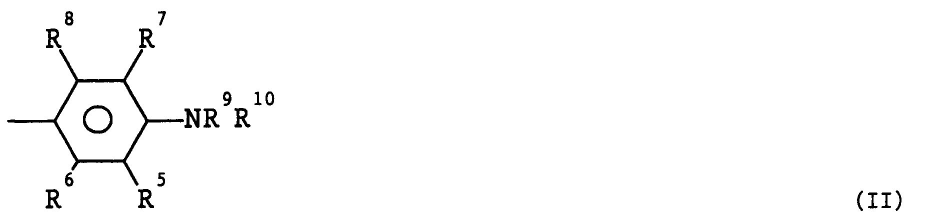
R⁵, R⁶, R⁷, and R⁸ each independently represent hydrogen, an alkyl group, an alkenyl group, an alkynyl group, an aryl group, an alkoxy group, an alkylthio group, an arylthio group, an aryloxy group, a carbamoyl group, a sulfamoyl group, hydroxy, SH, an amino group, a sulfonate, a halogen, NO₂, CN, NHSO₂R¹¹, NHCOR¹¹, OSO₂R¹¹, OCOR¹¹, COR¹¹ or R⁷ and R⁸ together and/or R⁵ and R⁶ together with the atoms to which they are attached represent the necessary atoms to complete a ring or R⁷ and R⁹ together with the atoms to which they are attached and/or R⁵ and R¹⁰ together with the atoms to which they are attached represent the necessary atoms to form a heterocyclic ring;
R¹¹ represents an alkyl group, an alkenyl group, an alkynyl group, an an aryl group, an alkyloxy group, an aryloxy group, an alkylthio group, an arylthio group, an amino group or a heterocyclic group;
R⁹ and R¹⁰ each independently represent hydrogen, an alkyl group, an alkenyl group, an alkynyl group, an aryl group, a heterocyclic group or R⁹ and R¹⁰ together with the atoms to which they are attached represent the necessary atoms to form a heterocyclic ring.

3. A dye donor element according to claim 1 wherein said dye corresponds to one of the following formulas: 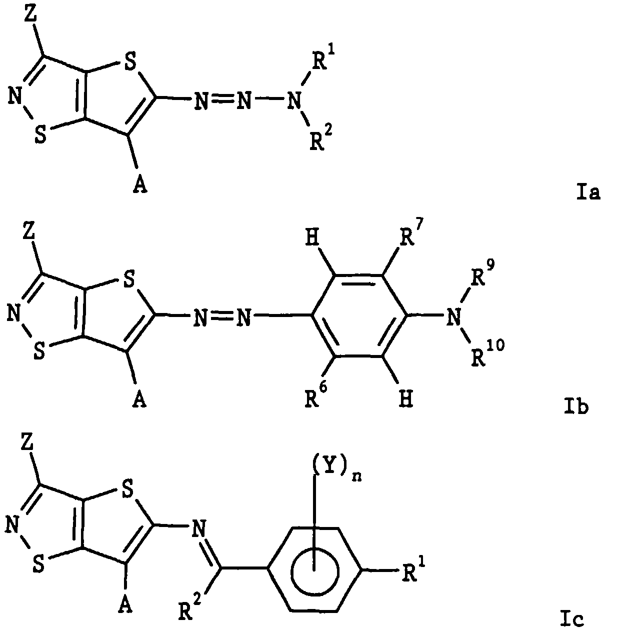 wherein Z, R¹, R², R⁶, R⁷, R¹⁰, Y and n have the same meaning as defined in the general formula (I) of claim 1.

4. A dye donor element according to claim 1, 2 or 3 wherein said dye layer comprises a repeating sequence of at least two dye frames and at least one of said dye frames comprising a dye according formula (I).

5. A dye donor element according to claim 4 wherein said dye layer comprises a sequence of at least three dye frames having respectively a yellow, magenta and cyan color.

6. A dye corresponding to the general formula (I) defined in claim 1.

7. A dye as defined by formula Ia, Ib or Ic of claim 3.

8. A method for making an image according to the thermal dye transfer process comprising the steps of :
- placing the dye layer of a dye donor element as defined in any of claims 1 to 5 in face-to-face relationship with a dye-image receiving layer of a receiver sheet;
- image-wise heating a thus obtained assemblage and
- separating said receiver sheet from said dye donor element.
